# EUROPÄISCHE PATENTSCHRIFT

(11) **EP 1 859 995 B1**
(45) Veröffentlichungstag und Bekanntmachung des Hinweises auf die Patenterteilung: **13.10.2010**
(21) Anmeldenummer: 07009920.5
(22) Anmeldetag: 18.05.2007
(51) Int. Cl.: B60R 1/12

(54) **Außenspiegel eines Fahrzeugs**
Exterior vehicle mirror
Rétroviseur d'un véhicule

(30) Priorität: 23.05.2006 DE 102006025070
(43) Veröffentlichungstag der Anmeldung: 28.11.2007
(60) Teilanmeldung: 08016972.5
(73) Patentinhaber: SMR Patents S.à.r.l., 1653 Luxembourg (LU)
(72) Erfinder: Apfelbeck, Robert, 73269 Hochdorf (DE); Liesener, Alf, 73614 Schorndorf (DE); Hezinger, Klaus-Dieter, 73770 Denkendorf (DE); Schmierer, Arne, 73230 Kirchheim (DE)
(74) Vertreter: Rausch, Gabriele

(56) Entgegenhaltungen:
- EP-A- 1 428 745
- DE-A1- 10 251 380
- DE-U1- 20 011 341
- US-A1- 2004 190 303

## Beschreibung

Die Erfindung betrifft einen Außenspiegel eines Fahrzeugs nach dem Oberbegriff des Anspruchs 1.

Außenspiegel, in die eine Lichtfunktion in Form eines Blinkersignals integriert ist, sind bekannt. Dazu ist in einer nach vorne weisenden Rückwand des Spiegelgehäuses ein Blinkermodul integriert. Innerhalb des Spiegelgehäuses sind verschiedene Komponenten, wie etwa ein Stellmotor zur Verkippung des Spiegels, für eine etwaige Beheizungseinrichtung oder zum Heranklappen des Außenspiegels in eine Parkposition angeordnet.

Aus der DE 102 51 380 A1 ist ein Außenrückspiegel bekannt, der ein Modul mit mehreren LEDs umfasst, so dass mit dem Modul unterschiedliche Lichtfunktionen bereitgestellt werden können. Das Modul ist von einer Abdeckscheibe im Spiegelgehäuse abgedeckt, durch welche die LEDs nach außen Licht abstrahlen können.

Die DE 200 11 341 U1 offenbart eine Leuchtenbaugruppe für einen Außenrückspiegel mit einer gemeinsamen Lichtaustrittsscheibe im Spiegelgehäuse.

Aufgabe der Erfindung ist es, einen Außenspiegel eines Fahrzeugs anzugeben, dessen Anwendungsbereich trotz begrenztem Bauraum erweitert ist.

Die Aufgabe wird erfindungsgemäß durch die Merkmale des Anspruchs 1 gelöst. Günstige Ausgestaltungen und Vorteile der Erfindung ergeben sich aus den weiteren Ansprüchen und der Beschreibung.

Der erfindungsgemäße Außenspiegel eines Fahrzeugs weist eine im montierten Zustand nach rückwärts gerichtete Öffnung in einem Gehäuse mit einem Hohlraum auf, in den ein Spiegel aufnehmbar ist, sowie eine nach vorne gerichtete, den Hohlraum begrenzende Rückwand mit einer Außenfläche. Wenigstens zwei verschiedene Lichtfunktionen sind an der Außenfläche und/oder am Spiegel darstellbar, wobei die Lichtfunktionen Leuchtmittel umfassen, die innerhalb des Gehäuses in einem oder mehreren, insbesondere wenigen, vorzugsweise höchstens zwei, Modulen zusammengefasst sind. Die Integration der Lichtfunktionen erfolgt über das oder die Module mit verschiedenen Signalfunktionen, die in den Außenspiegel eingebaut werden. Vorzugsweise ist jedem Modul wenigstens eine Lichtfunktion bzw. Signalfunktion, zugeordnet. Vorteilhaft ergibt sich, dass auch eine Mehrzahl von Leuchtmitteln zur Darstellung einer Lichtfunktion verwendet werden können, die sehr kompakt auf dem Modul angeordnet sein können. Verdrahtungen können sehr kurz sein oder in dem Modul beispielsweise als Leiterbahnen einer Platine integriert sein. Eine Platine kann dann sowohl als Träger des oder der Leuchtmittel, zur Befestigung im Gehäuse als auch zur Energieversorgung dienen. Ebenso können Leuchtmittel für verschiedene Lichtfunktionen in einem gemeinsamen Modul vorgesehen sein. Dabei ist zusätzlich in der Rückwand wenigstens eine nach rückwärts gerichtete, ovale Vertiefung eingebracht, die einen Durchbruch für ein Leuchtmittel aufweist, welches vom Hohlraum nach außen weist.

Es kann eine gemeinsame Lichtansteuerungseinheit vorgesehen sein, die im Gehäuse integriert ist. Bevorzugt umfasst ein Modul einen oder mehrere Träger für das oder die Leuchtmittel, Stromzuführungsmittel, Befestigungsmittel zur Befestigung im Gehäuse sowie eine Elektronik zur Ansteuerung des oder der Leuchtmittel. Die Leuchtmittel können durch korrespondierende Durchbrüche im Gehäuse nach außen Licht abstrahlen, oder sie sind in einem ein Modul bildenden Einsatz in das Gehäuse eingesetzt.

Vorzugsweise sind das oder die Module innenseitig an der Rückwand angeordnet. Mit besonderem Vorteil weist dabei das Modul zum Beaufschlagen der verschiedenen Lichtfunktionen elektrische Elemente auf, die über wenige Platinen im Hohlraum, beispielsweise auf ein oder zwei Platinen, aufgeteilt sind. Eine geeignete Anzahl wird der Fachmann bedarfsabhängig auswählen. Dadurch ist eine Montage auch mit geringem verfügbaren Bauraum möglich.

Die Leuchtmittel können in einem ein Modul bildenden Einsatz angeordnet sein, der in die Rückwand des Außenspiegels eingelassen ist.

Dies ermöglicht eine vorteilhafte Konfektionierung einer Leuchte für eine oder mehrere Lichtfunktionen dem Zusammenbau des Außenspiegels und erleichtert so den Zusammenbau des Außenspiegels. Weiterhin kann der Einsatz außerordentlich kompakt ausgeführt sein. Eine transparente Lichtscheibe kann am Einsatz vorgesehen sein, so dass dieser ohne weiteres in den Außenspiegel eingesetzt werden und eine separate Versiegelung vermieden werden kann. Alternativ kann jedoch beispielsweise eine separate Abdeckung oder dergleichen vorgesehen sein.

Dabei kann die wenigstens eine Vertiefung oval ausgebildet sein und/oder es kann eine Vertiefung rund ausgebildet sein.

Vorteilhaft dient die wenigstens eine Vertiefung als Reflektor des Leuchtmittels. Sind als Leuchtmittel LEDs (Licht emittierende Dioden) eingesetzt, kann die Vertiefung das abgestrahlte Licht wenigstens teilweise so reflektieren, dass eine gewisse Ausrichtung des abgestrahlten Lichts erfolgt. Ist die Lichtfunktion beispielsweise ein Tagfahrlicht, kann ein vorausfahrendes Fahrzeug das nachfolgende Fahrzeug besser erkennen, was Sicherheit im Straßenverkehr erhöht.

Die ovale Vertiefung kann etwa waagrecht angeordnet sein, wobei das Leuchtmittel im Bereich eines spiegelnahen Rands angeordnet ist und die Vertiefung sich vom Rand weg erstreckt.

Vorteilhaft kann die Vertiefung so tief ausgebildet sein, dass eine seitliche Erkennbarkeit der Lichtfunktion gegeben ist.

Besonders zweckmäßig kann jedes Leuchtmittel mit einer nach außen abdichtenden Versiegelung versehen sein. Damit kann ein Eindringen von Schmutz oder Feuchtigkeit in den Außenspiegel vermieden werden.

Die Versiegelung ist zweckmäßigerweise als klare Schicht über den Leuchtmitteln angeordnet, beispielsweise als Überzug darüber gegossen.

Mit Vorteil ist die Versiegelung als Abdeckung auf das Gehäuse aufgesetzt. Dabei kann sich die Abdeckung über die gesamte Rückwand erstrecken, oder die Abdeckung kann auf einen Bereich mit der einen oder mehreren Vertiefungen und/oder dem Einsatz beschränkt sein.

Bevorzugt sind die Lichtfunktionen wenigstens zwei aus der Gruppe sind Blinklicht, Tagfahrlicht, Seitenmarkierungslicht (SML), Standlicht, Positionslicht

(PO-Licht), Begrenzungslicht, Umfeldlicht, Totwinkelüberwachungslicht (SWA). Das Totwinkelüberwachungslicht hinterleuchtet vorzugsweise eine Anzeige, die der Fahrer im Spiegelglas sehen kann, während die anderen Lichtfunktionen vorzugsweise im Bereich der Rückwand, die nicht direkt vom Fahrer einsehbar ist, angeordnet sind, und deren Leuchten Licht nach unten, vorne, zur Seite und/oder nach oben abstrahlen.

Vorteilhaft können die Leuchtmittel so vorgesehen sein, dass unterschiedliche Farben darstellbar sind. So kann das Totwinkelüberwachungslicht eine Farbe abhängig von einer Entfernung zu einem Hindernis abgeben. Dies kann mit dem Fachmann geläufigen Mitteln erfolgen, wie Filterelemente oder verschiedenfarbige Leuchtmittel, die entsprechend aktiviert werden können.

Weitere Vorteile und Einzelheiten der Erfindung werden im Folgenden, anhand von in der Zeichnung beschriebenen bevorzugten Ausführungsbeispielen näher erläutert, ohne auf diese Ausführungsbeispiele beschränkt zu sein.

Es zeigen:
- Fig: 1a, b: einen Außenspiegel nach einer ersten bevorzugten Ausgestaltung mit Vertiefungen in Draufsicht (a) und als Schnitt (b); und

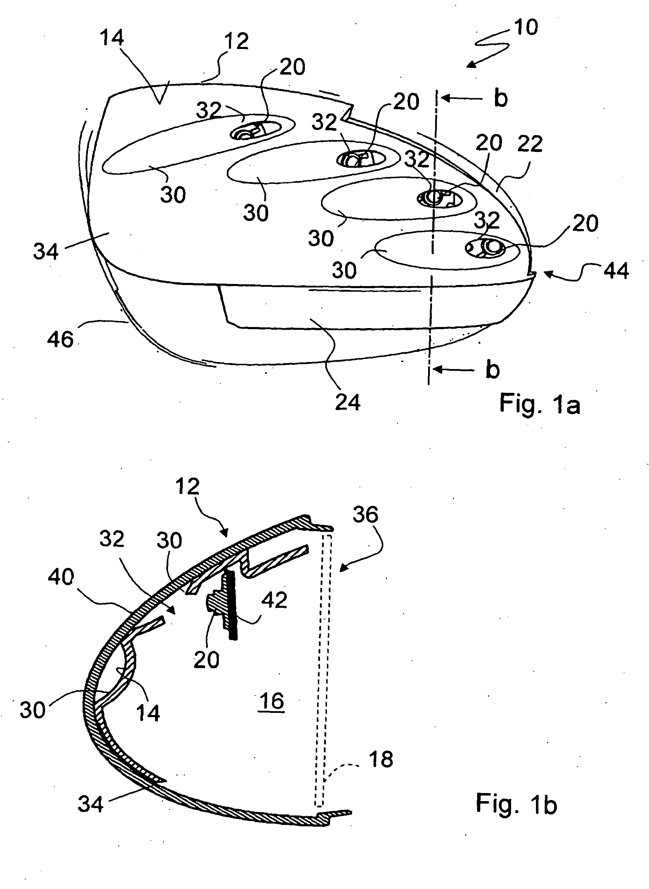

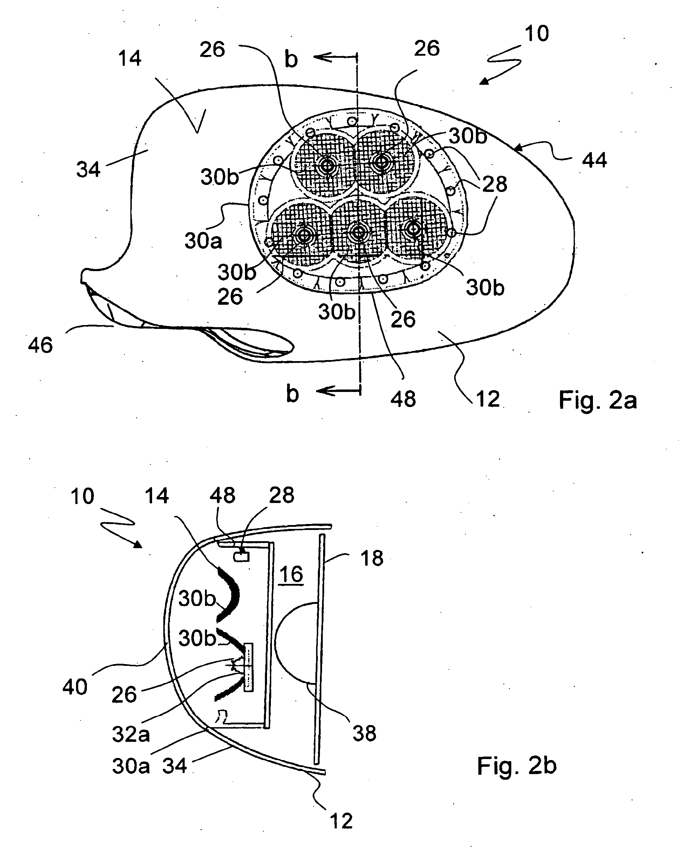

- Fig. 2a, b: einen Außenspiegel mit einer Ausgestaltung mit einem Einsatz mit Leuchtmitteln in Draufsicht (a) und als Schnitt (b), die mit der Ausgestaltung in Fig. 1a, 1b kombiniert ist (nicht dargestellt).

In den Figuren sind funktional gleich bleibende Elemente jeweils mit denselben Bezugszeichen beziffert.

Die Figuren 1 a und 1 b illustrieren eine erste bevorzugte Ausgestaltung eines erfindungsgemäßen Außenspiegels 10 eines Fahrzeugs in Draufsicht auf eine Rückwand 34 (Figur 1a) und als Schnitt entlang der Linie b-b (Figur 1b).

Der Außenspiegel 10 ist mit einem fahrzeugseitigen Ansatz 46, der in der Figur nur angedeutet ist, an einer Karosserie eines Fahrzeugs angeordnet. Der Außenspiegel 10 umfasst ein Gehäuse 12 mit einem Hohlraum 16 und mit einer im montierten Zustand nach rückwärts gerichteten Öffnung 36, in die ein Spiegel 18 eingesetzt ist. Der Hohlraum 16 ist in Vorwärtsrichtung durch eine nach vorne gewölbte Rückwand 34 mit einer Außenfläche 14 begrenzt.

An der Rückwand 34 sind mehrere verschiedene Lichtfunktionen bzw. Signalfunktionen dargestellt, deren Leuchtmittel 20, 22, 24 in einem schematisch angedeuteten Modul 42 zusammengefasst sind, welches innenseitig an der Rückwand 34 befestigt ist.

Beispielhaft können die Leuchtmittel 22 beispielsweise einem Positionslicht und Leuchtmittel 24 einem nach unten abstrahlenden Umgebungslicht zugeordnet sein, während die Leuchtmittel 20, die vorzugsweise als LEDs ausgebildet sind, als Blinklicht eingesetzt sein können. Die vier Leuchtmittel 20 sind in vier nach rückwärts gerichtete Vertiefungen 30 eingebracht und ragen aus dem Hohlraum 16 durch jeweils einen Durchbruch 32 in der Rückwand 34 des Gehäuses 12 nach außen. Die oval ausgebildeten Vertiefungen 30 verlaufen etwa waagrecht, wobei die Leuchtmittel 20 im Bereich eines spiegelnahen Rands 44 des Gehäuses 12 angeordnet sind und die Vertiefung 30 sich vom Rand 44 weg erstreckt. Die Vertiefungen 30 dienen als eine Art Reflektor des Leuchtmittels 20 und ermöglichen durch eine wenigstens geringe Richtwirkung des Lichts eine Erkennung der Leuchtmittel 20 von vorne und von der Seite.

Vorteilhaft kann die Vertiefung 30 so tief ausgebildet sein, dass eine seitliche Erkennbarkeit der Lichtfunktion gegeben ist.

Die Leuchtmittel 20, und auch 22 und 24, sind mit einer nach außen abdichtenden Versiegelung 40 versehen, die als transparente Abdeckung auf die Rückwand 34 des Außenspiegels 10 aufgesetzt ist. Die als Abdeckung ausgebildete Versiegelung 40 ermöglicht auch eine Lichtabgabe nach unten. Durch die glatte und alles übergreifende Gestalt der Versiegelung 40 ist das Innere des Außenspiegels 10 vor Verschmutzung oder dem Eindringen von Feuchtigkeit geschützt, und die Versiegelung 40 lässt sich leicht von außen reinigen.

In den Figuren 2a und 2b ist eine Ausgestaltung eines bevorzugten Außenspiegels 10 dargestellt, wobei Figur 2a eine Draufsicht und Figur 2b einen Schnitt entlang der Linie b-b zeigt. Die Ausgestaltung ist mit der Ausgestaltung nach den Figuren 1a, b kombiniert, welche in der Fig.2a, 2b jedoch nicht dargestellt ist.

Der Außenspiegel 10 ist mit einem fahrzeugseitigen Ansatz 46, der in der Figur nur angedeutet ist, an einer Karosserie eines Fahrzeugs angeordnet. Der Außenspiegel 10 umfasst ein Gehäuse 12 mit einem Hohlraum 16 und mit einer im montierten Zustand nach rückwärts gerichteten Öffnung 36, in die ein Spiegel 18 mit einem Stellmotor 38 zum Verkippen des Spiegels 18 eingesetzt ist. Der Hohlraum 16 ist in Vorwärtsrichtung durch eine nach vorne gewölbte Rückwand 34 mit einer Außenfläche 14 begrenzt.

An der Rückwand 34 sind mehrere verschiedene Lichtfunktionen bzw. Signalfunktionen dargestellt, deren Leuchtmittel 26, 28 in einem Modul 48 zusammengefasst sind, welches in die Rückwand 34 eingelassen ist. Dazu weist die Rückwand 34 einen Durchbruch 30a auf.

Die fünf Leuchtmittel 26 ragen in Durchbrüche 32a innerhalb von nach vorne geöffneten Reflektoren 30b und sind kranzartig von einer Mehrzahl von Leuchtmitteln 28, von denen der Übersichtlichkeit wegen nur einige bezeichnet sind, umgeben. Die Leuchtmittel 28 sitzen ebenfalls in kleinen, nicht näher bezeichneten Reflektoren. Die Leuchtmittel 26 und 28 geben bevorzugt unterschiedlich farbiges Licht ab.

Das als Einsatz ausgebildete Modul 48 ist mit einer als transparente Abdeckung ausgebildete Versiegelung 40 abgedeckt und gegen Eindringen von Schmutz und Feuchtigkeit geschützt. Die Versiegelung 40 kann Bestandteil des Moduls 48 sein, oder es kann wie im ersten Ausführungsbeispiel eine entsprechende Abdeckung über die gesamte Rückwand 34 vorgesehen sein.

## Patentansprüche

1. Außenspiegel eines Fahrzeugs mit einer im montierten Zustand nach rückwärts gerichteten Öffnung (36) in einem Gehäuse (12) mit einem Hohlraum (16), in den ein Spiegel (18) aufnehmbar ist, sowie eine nach vorne gerichtete, den Hohlraum (16) begrenzende Rückwand (34) mit einer Außenfläche (14), **dadurch gekennzeichnet, dass** wenigstens zwei verschiedene Lichtfunktionen an der Außenfläche (14) und/oder am Spiegel (18) darstellbar sind, wobei die Lichtfunktionen Leuchtmittel (20, 22, 24, 26, 28) umfassen, die innerhalb des Gehäuses (12) in einem oder mehreren Modulen (42, 48) zusammengefasst sind, wobei in der Rückwand (34) wenigstens eine nach rückwärts gerichtete Vertiefung (30) eingebracht ist, die einen Durchbruch (32) für ein Leuchtmittel (20) aufweist, welches vom Hohlraum (16) durch den Durchbruch (32) nach außen weist, und wobei die wenigstens eine Vertiefung (30) oval ausgebildet ist.

2. Außenspiegel nach Anspruch 1, **dadurch gekennzeichnet, dass** das oder die Module (42, 48) eine gemeinsame Lichtansteuerungseinheit im Gehäuse (12) aufweisen.

3. Außenspiegel nach Anspruch 1 oder 2, **dadurch gekennzeichnet, dass** das oder die Module (42, 48) innenseitig an der Rückwand (34) angeordnet ist.

4. Außenspiegel nach einem der vorhergehenden Ansprüche, **dadurch gekennzeichnet, dass** das oder die Module (42, 48) zum Beaufschlagen der verschiedenen Lichtfunktionen elektrische Elemente aufweist, die über wenige Platinen im Hohlraum (32) aufgeteilt sind.

5. Außenspiegel nach einem der vorhergehenden Ansprüche, **dadurch gekennzeichnet, dass** die Leuchtmittel (26, 28) in einem eines der Module (48) bildenden Einsatz angeordnet sind, das in die Rückwand (34) eingelassen ist.

6. Außenspiegel nach einem der vorhergehenden Ansprüche, **dadurch gekennzeichnet, dass** die wenigstens eine Vertiefung (30) rund ausgebildet ist.

7. Außenspiegel nach einem der vorhergehenden Ansprüche, **dadurch gekennzeichnet, dass** die wenigstens eine Vertiefung (30) als Reflektor des Leuchtmittels (20) dient.

8. Außenspiegel nach einem der vorhergehenden Ansprüche, **dadurch gekennzeichnet, dass** die ovale Vertiefung (30) etwa waagrecht angeordnet ist, wobei das Leuchtmittel (20) im Bereich eines spiegelnahen Rands (44) angeordnet ist und die Vertiefung (30) sich vom Rand (44) weg erstreckt.

9. Außenspiegel nach einem der vorhergehenden Ansprüche, **dadurch gekennzeichnet, dass** die Vertiefung (30) so tief ausgebildet ist, dass eine seitliche Erkennbarkeit der Lichtfunktion gegeben ist.

10. Außenspiegel nach einem der vorhergehenden Ansprüche, **dadurch gekennzeichnet, dass** jedes Leuchtmittel (20, 22, 24, 26, 28) mit einer nach außen abdichtenden Versiegelung (40) versehen ist.

11. Außenspiegel nach Anspruch 10, **dadurch gekennzeichnet, dass** die Versiegelung (40) als klare Schicht über den Leuchtmitteln (20, 22, 24, 26, 28) angeordnet ist.

12. Außenspiegel nach Anspruch 10 oder 11, **dadurch gekennzeichnet, dass** die Versiegelung (40) als Abdeckung auf das Gehäuse (12) aufgesetzt ist.

13. Außenspiegel nach einem der vorhergehenden Ansprüche, **dadurch gekennzeichnet, dass** die Lichtfunktionen wenigstens zwei aus der Gruppe sind Blinklicht, Tagfahrlicht, Seitenmarkierungslicht, Standlicht, Positionslicht, Begrenzungslicht, Umfeldlicht, Totwinkelüberwachungslicht.

14. Außenspiegel nach einem der vorhergehenden Ansprüche, **dadurch gekennzeichnet, dass** die Leuchtmittel (20, 22, 24, 26, 28) so vorgesehen sind, dass unterschiedliche Farben darstellbar sind.

## Claims

1. An exterior mirror of a vehicle with an opening (36) facing rearward in assembled state, in a housing (12) with a cavity (16), into which a mirror (18) can be received, and a forward facing rear wall (34) confining the cavity (16) with an exterior surface (14), **characterized in that** at least two different light functions can be performed on the exterior surface (14) and/or on the mirror (18), wherein the light functions comprise illuminants (20, 22, 24, 26, 28), which are grouped into one or several modules (42, 48) within the housing (12), **wherein** at least one rearward facing indentation (30) is disposed in the rear wall (34), which has a opening (32) for an illuminant (20), which faces outward from the cavity (16) trough opening (32) and wherein the at least one indentation (30) being provided oval.

2. An exterior mirror according to claim 1, **characterized in that** the module(s) (42, 48) have a common light control unit in the housing (12).

3. An exterior mirror according to claim 1, **characterized in that** the module(s) (42, 48) are disposed on the interior side of the rear wall (34).

4. An exterior mirror according to one of the preceding claims, **characterized in that** the module(s) (42, 48) have electrical elements, for activating the various light functions, which are distributed over few circuit boards in the cavity (32).

5. An exterior mirror according to one of the preceding claims, **characterized in that** the illuminants (26, 28) are disposed in an insert, forming one of the modules (48), which is integrated into the rear wall (34).

6. An exterior mirror according to one of the preceding claims, **characterized in that** the at least one indentation (30) is provided round.

7. An exterior mirror according to one of the preceding claims, **characterized in that** the at least one indentation (30) serves as a reflector of the illuminant (20).

8. An exterior mirror according to one of the preceding claims, **characterized in that** the oval indentation (30) is provided approximately horizontal, wherein the illuminant (20) is disposed in the area of the rim (44) close to the mirror, and the indentation (30) extends away from the rim (44).

9. An exterior mirror according to one of the preceding claims, **characterized in that** the indentation (30) is deep enough, so that a lateral recognition of the light function is provided.

10. An exterior mirror according to one of the preceding claims, **characterized in that** each illuminant (20, 22, 24, 26, 28) is provided with a seal (40) sealing towards the outside.

11. An exterior mirror according to claim 10, **characterized in that** the seal (40) is provided as a clear layer over the illuminants (20, 24, 26, 28).

12. An exterior mirror according to claim 10 or 11, **characterized in that** the seal (40) is placed onto the housing (12) as a cover.

13. An exterior mirror according to one of the preceding claims, **characterized in that** the light functions are at least two out of the group comprising signal light, day running light, side marking light, parking light, position light, boundary light, curb light, blind angle monitoring light.

14. An exterior mirror according to one of the preceding claims, **characterized in that** the illuminants (20, 22, 24, 26, 28) are provided so that various colors can be emitted.

## Revendications

1. Rétroviseur extérieur d'un véhicule avec une ouverture (36) orientée vers l'arrière à l'état monté dans un logement (12) avec un espace creux (16), dans lequel un miroir (18) peut être logé, ainsi qu'une paroi arrière (34) orientée vers l'avant, délimitant l'espace creux (16) avec une surface externe (14), **caractérisé en ce qu'**au moins deux fonctions lumineuses différentes peuvent être représentées sur la surface externe (14) et/ou sur le miroir (18), les fonctions lumineuses comprenant des moyens lumineux (20, 22, 24, 26, 28) qui sont réunis au sein du logement (12) en un ou plusieurs modules (42, 48), au moins un renfoncement (30) orienté vers l'arrière étant introduit dans la paroi arrière (34), lequel présente un percement (32) pour un moyen lumineux (20) qui est tourné vers l'extérieur depuis l'espace creux (16) à travers le percement (32), et l'au moins un renfoncement (30) étant réalisé de manière ovale.

2. Rétroviseur extérieur selon la revendication 1, **caractérisé en ce que** le ou les modules (42, 48) présentent un module de commande lumineuse commun dans le logement (12).

3. Rétroviseur extérieur selon la revendication 1 ou 2, **caractérisé en ce que** le ou les modules (42, 48) sont disposés du côté interne sur la paroi arrière (34).

4. Rétroviseur extérieur selon l'une quelconque des revendications précédentes, **caractérisé en ce que** le ou les modules (42, 48) présentent des éléments électriques pour solliciter les différentes fonctions lumineuses qui sont répartis sur quelques disques dans l'espace creux (32).

5. Rétroviseur extérieur selon l'une quelconque des revendications précédentes, **caractérisé en ce que** les moyens lumineux (26, 28) sont disposés dans un insert formant un des modules (48) qui est introduit dans la paroi arrière (34).

6. Rétroviseur extérieur selon l'une quelconque des revendications précédentes, **caractérisé en ce que** l'au moins un renfoncement (30) est réalisé de manière ronde.

7. Rétroviseur extérieur selon l'une quelconque des revendications précédentes, **caractérisé en ce que** l'au moins un renfoncement (30) sert de réflecteur du moyen lumineux (20).

8. Rétroviseur extérieur selon l'une quelconque des revendications précédentes, **caractérisé en ce que** le renfoncement ovale (30) est disposé de manière approximativement horizontale, le moyen lumineux (20) étant disposé dans la région d'un bord proche du miroir (44) et le renfoncement (30) s'étendant à l'écart du bord (44).

9. Rétroviseur extérieur selon l'une quelconque des revendications précédentes, **caractérisé en ce que** le renfoncement (30) est réalisé de manière si profonde qu'une perceptibilité latérale de la fonction lumineuse en résulte.

10. Rétroviseur extérieur selon l'une quelconque des revendications précédentes, **caractérisé en ce que** chaque moyen lumineux (20, 22, 24, 26, 28) est pourvu d'un scellement (40) réalisait une étanchéité vers 1'extérieur.

11. Rétroviseur extérieur selon la revendication 10, **caractérisé en ce que** le scellement (40) est disposé en tant que couche transparente au-dessus des moyens lumineux (20, 22, 24, 26, 28).

12. Rétroviseur extérieur selon la revendication 10 ou 11, **caractérisé en ce que** le scellement (40) est posé en tant que recouvrement sur le logement (12).

13. Rétroviseur extérieur selon l'une quelconque des revendication précédente, **caractérisé en ce que** les fonctions lumineuses sont au moins deux parmi le groupe que sont le feu clignotant, le feu diurne, le feu de marquage latéral, le feu de veille, le feu de position, le feu de délimitation, le feu de champ périphérique, le feu de surveillance de l'angle mort.

14. Rétroviseur extérieur selon l'une quelconque des revendications précédentes, **caractérisé en ce que** les moyens lumineux (20, 22, 24, 26, 28) sont prévus de sorte que différentes couleurs peuvent être représentées.
